(19) Europäisches Patentamt
European Patent Office
Office européen des brevets

(11) EP 1 724 741 A1

(12) **EUROPEAN PATENT APPLICATION**
published in accordance with Art. 158(3) EPC

(43) Date of publication:
**22.11.2006 Bulletin 2006/47**

(21) Application number: **05710458.0**

(22) Date of filing: **15.02.2005**

(51) Int Cl.:
***G09F 9/00*** *(2006.01)*

(86) International application number:
**PCT/JP2005/002676**

(87) International publication number:
**WO 2005/088587 (22.09.2005 Gazette 2005/38)**

(84) Designated Contracting States:
**DE FR GB**

(30) Priority: **10.03.2004 JP 2004067468**

(71) Applicant: **SUMITOMO OSAKA CEMENT CO., LTD.**
**Tokyo 102-8465 (JP)**

(72) Inventor: **IIJIMA, Tomohiko,**
**Sumitomo Osaka Cement Co., Ltd.**
**Tokyo 1028465 (JP)**

(74) Representative: **Cohausz & Florack**
**Patent- und Rechtsanwälte**
**Bleichstrasse 14**
**40211 Düsseldorf (DE)**

(54) **TRANSPARENT LAMINATE**

(57) A transparent laminate useful as an optical filter having an excellent anti-reflection property, a near-infrared ray absorption property, an electromagnetic wave-shielding property, durability, visibility and reduced weight. The transparent laminate comprises a first laminate portion including a first transparent substrate, an anti-reflection layer and a near infrared ray-absorption layer respectively formed on the front and back surfaces thereof; and a second laminate portion including a second transparent substrate and an electromagnetic wave-shielding layer formed on one surface thereof. The first transparent substrate and the second transparent substrate are integrally jointed together; i.e., the near infrared ray-absorption layer and the electromagnetic wave-shielding layer or a metal mesh layer are integrally joined together via an adhesive layer.

Fig. 1

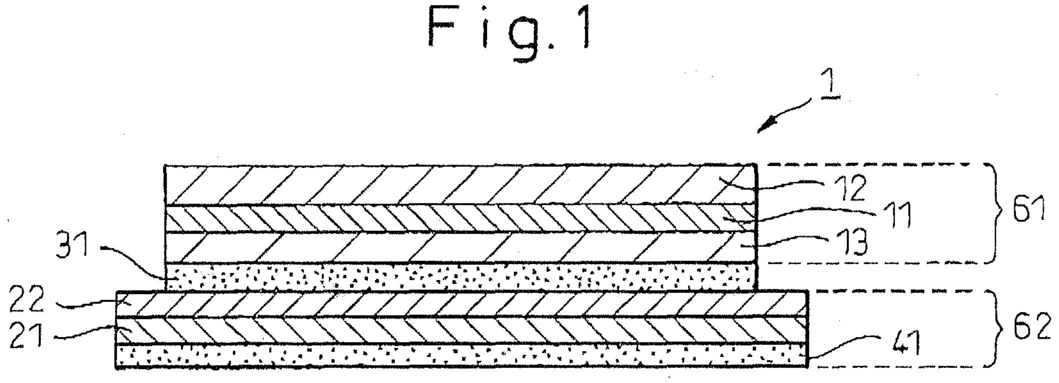




Printed by Jouve, 75001 PARIS (FR)

## Description

TECHNICAL FIELD

The present invention relates to a transparent laminate. More specifically, the invention relates to a transparent laminate useful as an optical filter for a display surface of a display device such as a plasma display device.

BACKGROUND ART

A plasma display device (hereinafter often abbreviated as PDP) is constituted by bonding a front glass substrate having a display electrode, a bus electrode, a dielectric layer and a protection layer, and a back glass substrate having a data electrode, a dielectric layer and a stripe barrier rib and a fluorescent substance layer in a manner that the electrodes intersect at right angles thereby to form a cell, and sealing a discharge gas such as xenon in the cell. The plasma display device emits light in a manner that upon applying a voltage across the data electrode and the display electrode, there takes place an electric discharge of xenon, whereby an ultraviolet ray is generated when xenon ions in a plasma state return back to the ground state, the ultraviolet ray exciting a fluorescent layer to emit red (R), green (G) and blue (B) lights. In the process of emitting light, there are also generated near-infrared rays and electromagnetic waves in addition to visible light. Therefore, the plasma display device usually has a anti-reflection film, a near infrared ray-absorbing film and a filter having an electromagnetic wave-cutting function, that are provided on the front surface of a plasma display light-emitting portion of the glass substrate.

The plasma display device is a thin display device requiring a small space for installation, and is considered to be useful as a display device that can be hang on a wall. In the above-mentioned plasma display device as described in, for example, JP-10-319859-A (patent document 1), however, an optical filter means constituted by sticking a film laminate of film layers on a glass is provided, maintaining a predetermined space, on the PDP device that includes light-emitting means. Therefore, the weight cannot be decreased to a sufficient degree. To use the PDP device in a general household by hanging it on a wall, the wall must have a sufficiently large strength making it often necessary to carry out construction to reinforcing the wall. Further, due to reflection by the front glass portion of the PDP, by the front surface and back surface of the optical filter, there occurs such a defect that the external light is doubly reflected on the front surface. Usually, an electromagnetic wave-shielding film used for the optical filter is chiefly a metal (copper) mesh that is subjected to the etching or is the one having a metal (copper) exposed on the etched end surface. Therefore, the color of reflection specific to the metal (copper) adversely affects the color tone of the displayed image.
[Patent document 1] JP-10-319859-A

DISCLOSURE OF THE INVENTION

Problems to be Solved by the Invention

The present invention provides a transparent laminate which has excellent anti-reflection property, near infrared ray-shielding property and electromagnetic wave-shielding property, features excellent durability and visibility, is light in weight, can be easily produced and easily handled, and can be used as an optical filter on the display surface of a display device such as a plasma display device.

Means for Solving the Problems

The transparent laminate according to the present invention comprises a first laminate portion including a first transparent substrate, an anti-reflection layer formed on one surface thereof, and a near infrared ray-absorption layer formed on the other surface thereof; a second laminate portion including a second transparent substrate and an electromagnetic wave-shielding layer formed on one surface thereof; and an adhesive layer for joining the near infrared ray-absorption layer in the first laminate portion to the second laminate portion.

In the transparent laminate of the present invention, the electromagnetic wave-shielding layer is preferably a metal mesh layer.

In the transparent laminate of the present invention, the near infrared ray-absorption layer in the first laminate portion is preferably joined to the electromagnetic wave-shielding layer in the second laminate portion.

In the transparent laminate of the present invention, the second laminate portion may further have a back surface adhesive layer formed on the other surface of the second transparent substrate.

In the transparent laminate of the present invention, the back surface adhesive layer of the second laminate portion preferably has an adhering strength of 1 to 20 N/25 mm.

In the transparent laminate of the present invention, preferably, the near infrared ray-absorption layer in the

first laminate portion includes:

a first near infrared ray-absorbing coloring matter comprising at least one kind of a near infrared ray-absorbing diimonium compound;
a second near infrared ray-absorbing coloring matter comprising at least one kind of a coloring matter compound having a maximum absorption in a region of near infrared wavelengths of 750 to 950 nm and is different from the above diimonium compound; and
a transparent resin containing a polymer of at least one kind of ethylenically unsaturated monomer;
and at least 30% by mass of the ethylenically unsaturated monomer constituting the polymer for the transparent resin is a monomer represented by the following general formula (2):

$$CH_2 = \overset{\overset{\displaystyle R}{|}}{C} - CO- OX \qquad (2)$$

in which formula (2), R is a hydrogen atom or a methyl group, and X is a cyclic hydrocarbon group having 6 to 25 carbon atoms.

In the transparent laminate of the present invention, the near infrared ray-absorbing diimonium compound for the first infrared ray-absorbing coloring matter contained in the near infrared ray-shielding layer in the first laminate portion, is preferably constituted by a diimonum compound cation and a counter anion represented by the following chemical formula (1) :

$$(CF_3SO_2)_2N^- \qquad (1)$$

In the transparent laminate of the present invention, the near infrared ray-absorbing diimonium compound for the first near infrared ray-absorbing coloring matter contained in the near infrared ray-shielding layer in the first laminate portion, is preferably one expressed by the following chemical formula (3):

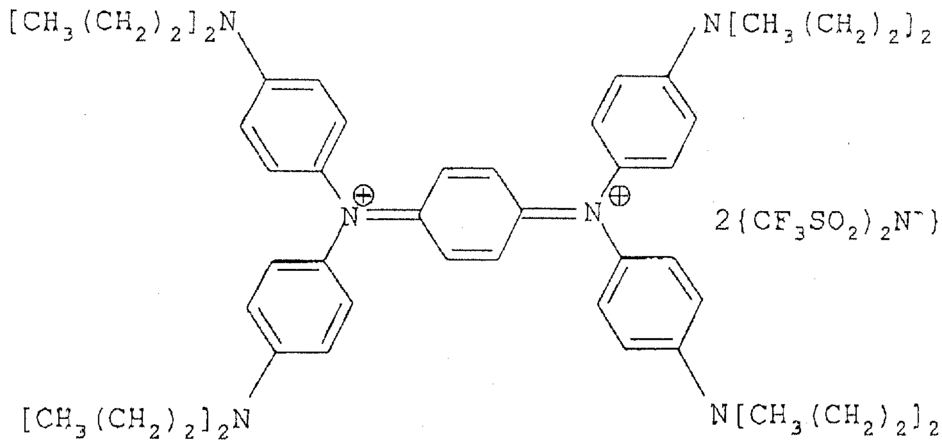

$2\{(CF_3SO_2)_2N^-\}$ (3)

In the transparent laminate of the present invention, the transparent resin contained in the near infrared ray-absorption layer in the first laminate portion, preferably has a glass transition temperature of 60 to 120°C, a number average molecular weight of 20,000 to 80,000, and a weight average molecular weight of 200,000 to 400,000.

In the transparent laminate of the present invention, the anti-reflection layer in the first laminate portion is preferably constituted by a hard coated layer, an electrically conducting layer of an intermediate refractive index laminated on the hard coated layer, a layer of a high refractive index laminated on the electrically conducting layer of an intermediate refractive index, and a layer of a low refractive index laminated on the layer of a high refractive index.

In the transparent laminate of the present invention, the hard coated layer included in the anti-reflection layer preferably contains fine oxide particles and a binder component, and the content of the fine oxide particles is not less than 30% by mass.

In the transparent laminate of the present invention, the metal mesh layer included in the second laminate

portion preferably includes a metal mesh having a surface that is blackened by being electrolytically plated with a black metal.

In the transparent laminate of the present invention, the electromagnetic wave-shielding layer preferably has a thickness of 1 to 15 μm.

In the transparent laminate of the present invention, a shock-absorbing layer is preferably further included between the near infrared ray-absorption layer in the first laminate portion and the adhesive layer.

A method of producing a transparent laminate of the present invention comprises forming an anti-reflection layer on one surface of a first transparent substrate and, thereafter, forming a near infrared ray-absorption layer on the other surface of the first transparent substrate thereby to form a first laminate portion, separately forming a metal mesh layer on one surface of a second transparent substrate to form a second laminate portion, and adhering the near infrared ray-absorption layer in the first laminate portion and the metal mesh layer in the second laminate portion together via an adhesive layer to form a laminate.

In the method of producing a transparent laminate of the present invention, preferably, an image having a desired mesh pattern is printed on one surface of the second transparent substrate by using an ink containing a catalyst to form a metal mesh layer of the second laminate portion, the printed surface is subjected to a electroless plating and/or an electroplating, so that the metal precipitates according to the pattern of the catalyst-containing ink image and is deposited on the second transparent substrate.

Effect of the Invention

The transparent laminate of the present invention has excellent anti-reflection property, near infrared ray-absorption property and electromagnetic wave-shielding property, features excellent durability and visibility of an image by naked eyes, is light in weight, can be easily produced and easily handled, and is practically useful as an optical filter on the display surface of a variety of display devices such as a plasma display device and the like.

## BRIEF DESCRIPTION OF THE DRAWINGS

Fig. 1 is a sectional view illustrating a transparent laminate according to the present invention;

Fig. 2 is a sectional view illustrating another transparent laminate according to the present invention;

Fig. 3 is a sectional view illustrating a anti-reflection layer in the transparent laminate according to the present invention;

Fig. 4 is a front view illustrating the transparent laminate according to the present invention; and

Fig. 5 is a partial sectional view of when the transparent laminate according to the present invention is mounted on a PDP.

## BEST MODE FOR CARRYING OUT THE INVENTION

Referring to Fig. 1, a transparent laminate 1 of the present invention includes a first laminate portion 61 having a first transparent substrate 11, an anti-reflection layer 12 formed on one surface thereof and a near infrared ray-absorption layer 13; a second laminate portion 62 having a second transparent substrate 21 and an electromagnetic wave-shielding layer 22 formed on one surface thereof; and an adhesive layer 31 for joining the first laminate portion 61 and the second laminate portion 62 together.

In a conventional transparent laminate for optical filters, the above-mentioned functional layers are formed on separate transparent substrates, and the transparent substrates carrying these functional layers are laminated on a glass panel via adhesive layers.

In the transparent laminate of the present invention, the anti-reflection layer is formed on one surface of the first transparent substrate and the near infrared ray-absorption layer is formed on the other surface thereof, making it possible to decrease the numbers of the transparent substrates and of the adhesive layers, to realize a high transmission factor and a low haze and, hence, to obtain improved optical characteristics.

As described above, the transparent laminate of the present invention is integrally constituted, by packaging various functions therein, while decreasing the number of the adhesive layers and the number of the substrates that do not contribute to the functions but rather adversely affect depending upon the cases. The step of adhesion needs be executed only one time making it possible to decrease the number of production steps, to increase the production yield, to stabilize performance of the products and to improve reliability. Besides, the anti-reflection layer forms the outermost layer of the transparent laminate and exhibits excellent effect of preventing the reflection.

In the transparent laminate of the present invention which comprises a first laminate portion having a first

transparent substrate, an anti-reflection layer and a near infrared ray-absorption layer formed on the surfaces thereof, and a second laminate portion having a second transparent substrate and an electromagnetic wave-shielding layer formed on one surface thereof, it is desired that the side of the near infrared ray-absorption layer in the first laminate portion and the side of the electromagnetic wave-shielding layer in the second laminate portion are laminated and joined together via an adhesive layer. In this case, the near infrared ray-absorption layer and the electromagnetic wave-shielding layer are protected being held between the first and second transparent substrates and, hence, exhibit excellent durability, resistance against aging, and reliability. Further, when a metal mesh layer is used as the electromagnetic wave-shielding layer, the adhesive layer fills voids of the metal mesh in the metal mesh layer, and there is obtained the transparent laminate without voids.

(First and second transparent substrates)

There is no limitation on the kind and composition of the first transparent substrate and the second transparent substrate so far as they are transparent materials. It is desired that the material constituting the first and second transparent substrates is, usually selected from transparent plastic materials, such as a plate-like, sheet-like or film-like polyester substrate, a triacetyl cellulose substrate, a polycarbonate substrate, a polyether sulfone substrate, a polyacrylate substrate, a norbornene substrate and an amorphous polyolefin substrate. There is no particular limitation on the thickness thereof, either, and there can be used a film or a plate thereof having a thickness of, usually, about 50 μm to about 10 mm: As the polyester substrate, there is preferably used a polyethylene terephthalate (hereinafter also referred to as PET) substrate owing to its durability, resistance against the solvents and productivity. Further, the first transparent substrate and the second transparent substrate may have been colored for adjusting the color tone and the transmission factor.

The transparent laminate of the present invention exhibits excellent anti-reflection effect, near infrared ray-absorption effect and electromagnetic wave-shielding effect, which are necessary for the plasma display. Therefore, the transparent laminate is stuck to a panel such as of a glass or a plastic material, or is directly stuck to the display surface of the plasma display device to form an optical filter having excellent properties on the surface of the plasma display device. By using transparent plastic film substrates as the first transparent substrate and as the second transparent substrate, in particular, there can be constituted a transparent laminate which is light in weight and is flexible. The transparent laminate including the above substrates of the present invention is particularly desirable when it is directly stuck to the surface of the plasma display device.

(Ultraviolet ray-shielding property of the first transparent substrate)

In the transparent laminate of the present invention, further, it is desired to use a material having ultraviolet ray-shielding property as the first transparent substrate. This is because the near infrared ray-absorbing coloring matter used in the near infrared ray-shielding layer, usually, has a low resistance against the ultraviolet rays, and can be suppressed from being deteriorated by the use of the material having ultraviolet ray-shielding property as the first transparent substrate. The transparent substrate having ultraviolet ray-shielding property can be obtained by, for example, containing the ultraviolet ray-absorbing agent in the first transparent substrate comprising the above material. As the ultraviolet ray-absorbing agent, there can be used an ultraviolet ray-absorbing compound of the type of benzophenone, benzotriazole, paraaminobenzoic acid or salicylic acid. Usually, the effect is not exhibited to a sufficient degree unless the ultraviolet ray-absorbing agent is added in an amount greater than a given amount. When an ultraviolet ray-absorbing agent is to be added to the coated layer having a small thickness, a limitation is imposed on the amount of the ultraviolet ray-absorbing agent that can be contained in the coating layer making it difficult to obtain the ultraviolet ray-shielding effect as desired. In the transparent laminate of the present invention, however, the near infrared ray-absorption layer is positioned on the inside of the first transparent substrate. Therefore, the ultraviolet ray-absorbing agent is contained in the first transparent substrate itself having a thickness greater than that of the coated layer; i.e., the ultraviolet ray-absorbing agent can be contained in an amount large enough to suppress the near infrared ray-absorbing coloring matter from deteriorating and to maintain excellent near infrared ray-absorbing property. It is desired that the ultraviolet ray-shielding property of the first transparent substrate is such that the ultraviolet ray transmission factor is not larger than 2% in the ultraviolet region of 380 nm or shorter.

(Near infrared ray-shielding layer)

In the transparent laminate of the present invention, it is desired that the near infrared ray-absorption layer works to shield the near infrared rays in the region of 800 to 1100 nm, and comprises a resin matrix in which a near infrared ray-absorbing coloring matter is contained.

There is no particular limitation on the near infrared ray-absorbing coloring matter provided it works to shield

near infrared rays in the region of 800 to 1100 nm, and there can be used, for example, a diimonium compound, an aluminum compound, a phthalocyanine compound, an organometal complex compound, a cyanine compound, an azo compound, a polymethine compound, a xenon compound, a diphenylmethane compound, a triphenylmethane compound or a mercaptonaphthol compound, which may be used in singly or in a suitable combination of two or more kinds.

The diimonium compound has an absorption of a molar absorption coefficient which is as strong as about 100,000 in the near infrared ray region of wavelengths of 850 to 1100 nm and, hence, exhibits excellent near infrared ray-absorption property. The diimonium compound has an absorption to a slight degree in a visible region of wavelengths of 400 to 500 nm, and exhibits a yellowish brown transmission color. Owing to its visible light transmission property superior to that of other near infrared ray-absorbing coloring matters, however, it is desired that at least one kind of diimonium compound is contained in the near infrared ray-absorbing coloring matter used in the transparent laminate of the present invention.

As the near infrared ray-absorbing diimonium compound for the near infrared ray-absorption layer used in the transparent laminate of the invention, there is preferably used a compound constituted by a diimonium compound cation and a counter anion expressed by the above chemical formula (1) : $(CF_3SO_2)_2N^-$. As the near infrared ray-absorbing diimonium compound, it is desired to use the compound of the above-mentioned chemical formula (3).

In order for the near infrared ray-absorption layer to exhibit near infrared ray-shielding property to a degree that is practically sufficient, it is desired that the transmission factor is not larger than 20% for the near infrared rays of wavelengths of 900 to 1000 nm. A desired amount of the near infrared ray-absorbing coloring matter blended in the near infrared ray-shielding layer varies depending upon the thickness of the near infrared ray-absorption layer. When the diimonium compound is used while selecting the thickness of the near infrared ray-shielding layer to be about 5 to 50 μm, however, it is desired that the near infrared ray-absorbing coloring matter compound is blended in an amount of about 0.5 to about 5.0 parts by mass in 100 parts by mass of the transparent resin used as the matrix. When the near infrared ray-absorbing coloring matter compound is blended in an amount in excess of 5 parts by mass per 100 part by mass of the transparent matrix resin, the coloring matter often segregates in the near infrared ray-absorption layer that is obtained or the transparency decreases for the visible light.

It is, further, desired that the diimonium compound that is used has a melting point of 190°C or more to impart practically sufficient durability to the near infrared ray-absorption layer that is obtained. While the diimonium compound having a melting point lower than 190°C is easily decomposed under high-temperature high-humidity conditions, the diimonium compound having a melting point of 190°C or more, makes it possible to obtain a near infrared ray-absorption layer having practically favorable durability upon selectively using a matrix resin of a preferred kind that will be described later.

Further, in order for the near infrared ray-absorption layer to exhibit near infrared ray-absorption property which is practically high enough, it is desired to use the near infrared ray-absorbing coloring matter having a near infrared ray transmission factor of not higher than 20% for the wavelengths of 850 to 900 nm. When, for example, the diimonium compound is used for this purpose, therefore, it is desired to further use, as a second near infrared ray-absorbing coloring matter, one or more kinds of coloring matters having a maximum absorption at 750 to 900 nm but without substantially having absorption in the region of visible light and, for example, to use one or two or more kinds of near infrared ray-absorbing coloring matters having ratios of the absorption coefficients at the maximum absorption wavelengths and the absorption coefficients at wavelengths of 450 nm (central wavelength of blue light), 525 nm (central wavelengths of green light) and 620 nm (central wavelengths of red light) of not smaller than 5.0 and, more preferably, not smaller than 8.0. When any one of the ratios of the absorption coefficients is smaller than 5.0, any one of the visible light transmission factors becomes smaller than 60% at wavelengths of 450 nm (central wavelength of blue light), 525 nm (central wavelength of green light) and 620 nm (central wavelength of red light) provided the average transmission factor at 850 to 900 nm, that is practically necessary, is not larger than 20%. Therefore, the transmission factor in the visible light region becomes practically insufficient.

As the second near infrared ray-absorbing coloring matter compounds having a maximum absorption at 750 to 900 nm and ratios of the absorption coefficients at the maximum absorption wavelengths and the absorption coefficients at wavelengths of 450 nm (central wavelength of blue light), 525 nm (central wavelength of green light) and 620 nm (central wavelength of red light) of not smaller than 5.0, there can be used a dithiol-nickel complex compound, an indolium compound, a phthalocyanine compound and a naphthalocyanine compound. In particular, the phthalocyanine compound and the naphthalocyanine compound, usually, have excellent durability and can be favorably used. However, the naphthalocyanine compound is expensive and, hence, the phthalocyanine compound is preferably used in practice.

In the transparent laminate of the present invention, further, it is desired that the transmission factor for the visible light of a wavelength of 590 nm is lower, by not less than 10%, than the transmission factors for the visible lights of wavelengths of 450 nm, 525 nm and 620 nm. The above transparent laminate of the present invention which is used as an optical filter works to enhance the contrast of the display of the plasma display and to improve the function for correcting the color tone.

To decrease the transmission factor of the transparent laminate of the present invention for the visible light of

a wavelength of 590 nm to be lower, by not less than 10%, than the transmission factors thereof for the visible lights of wavelengths of 450 nm, 525 nm and 620 nm, it is desired that the near infrared ray-absorption layer contains selectively absorbing coloring materials. There is no particular limitation on the coloring material which selectively absorbs visible light of a wavelength of 590 nm so far as it does not adversely degenerate the composition of the diimonium compound, and there can be preferably used a quinacridone pigment, an azomethine compound, a cyanine compound or a porphyrin compound.

As the matrix resin for the near infrared ray-absorbing coloring matter, there can be used, for example, an acrylic resin and a methacrylic resin. Preferably, however, there is used a transparent resin having a glass transition point of not lower than 60°C. It is desired that the transparent resin is any one of acrylic resin or a methacrylic resin. When the glass transition point of the transparent resin is lower than 60°C, the resin is softened when it is exposed to a high temperature of not lower than 60°C for extended periods of time and, at the same time, the coloring matter and, particularly, the diimonium coloring matter compound in the near infrared ray-shielding layer may be degenerated. Therefore, the transparent laminate loses stability after extended periods of time, such as losing color balance or losing a near infrared ray-absorption performance. On the other hand, when the glass transition point is more than 60°C, the thermal degradation of the coloring matter and, particularly, the coloring matter comprising the diimonium compound is prevented, in the near infrared ray-absorption layer that is obtained. Further, use of the above-mentioned resin makes it possible to prevent the coloring matter in the near infrared ray-absorption layer from being deteriorated and the near infrared ray-absorption layer from the distortion and exfoliation at the time when the near infrared ray-shielding layer is laminated and joined to the electromagnetic wave-shielding layer via the adhesive layer. As the resin that satisfies the above requirements, there can be exemplified a polyester resin, an acrylic resin and a methacrylic resin. Desirably, however, there can be used an acrylic resin and/or a methacrylic resin which can be excellently dyed (fixed) with the diimonium compound which is a basic dye.

To form the near infrared ray-absorption layer, there has been known a method according to which the near infrared ray-absorbing coloring matter and the matrix resin are dissolved or dispersed in a solvent, and the obtained solution or the dispersion is applied onto one surface of the first transparent substrate while allowing the solvent to dry and evaporate. The coating method may be an ordinary method of forming a coated layer by using, for example, a bar coater, a gravure reverse coater or a slit die coater.

As a solvent for the coating solution for forming the near infrared ray-shielding layer, there can be used, for example, methyl ethyl ketone, methyl isobutyl ketone, cyclohexanone, acetone, acetonitrile, dichloromethane, dimethylformamide, butyl acetate and toluene, which may be used alone or mixed together.

(Anti-reflection layer)

In the transparent laminate of the present invention, there is no limitation on the constitution and composition of the anti-reflection layer formed on the other surface of the first transparent substrate. The anti-reflection layer may have a single-layer structure or a multi-layer structure. On the anti-reflection layer, there may be further formed an electrically conducting layer such as an antistatic layer and/or a thin layer having the function of preventing glare.

(Electromagnetic wave-shielding layer)

In the transparent laminate of the present invention, there is no limitation on the constitution and composition of the electromagnetic-shielding layer formed on one surface of the second transparent substrate in the second laminate portion. The electromagnetic wave-shielding layer may be in any form provided it has the electromagnetic wave-shielding property and image-transmitting property. For example, there can be used a metal mesh layer or a transparent electrically conducting film containing an electrically conducting material.

For example, the metal mesh layer may be one obtained by bonding the metal mesh to the second transparent substrate or may be one obtained by laminating a metal foil such as copper foil on the second transparent substrate or by plating the second transparent substrate with a metal such as copper, and etching the metal layer in the shape of a mesh pattern. Here, as the metal mesh layer obtained by sticking the metal mesh to the second transparent substrate, there can be used a metal mesh or the one obtained by plating a metal-plated mesh onto the surface of a fiber. Further, the transparent electrically conducting layer may be formed by evaporating or sputtering an electrically conducting substance such as silver or the like.

It is, further, desired that the electromagnetic wave-shielding layer has a thickness of 1 to 15 μm and, preferably, 1 to 10 μm. When the metal mesh layer that is used as the electromagnetic wave-shielding layer has a thickness which is not smaller than 15 μm, the angle of visual field becomes narrow to adversely affect the watching. Further, even when the surface is blackened, the metal mesh is less blackened in the direction of depth when it is watched from a tilted direction, and the color tone of the metal is exposed to adversely affect the color tone of the image.

In the second laminate portion 62 of the transparent laminate 1 of the present invention as shown in Fig. 1,

further, an electromagnetic wave-shielding layer 22 may be formed on one surface of the second transparent substrate 21 and a back surface adhesive layer 41 may be formed on the other surface thereof. The back surface adhesive layer works to stick the transparent laminate of the present invention to a panel such as of a glass or a plastic material, or to directly stick it to the surface of the plasma display, enabling an optical filter having excellent properties to be fixed to the display surface of the plasma display device. Further, the back surface adhesive layer 41 may be formed on the electromagnetic wave-shielding layer 22 when the second transparent substrate 21 is in contact with the adhesive layer 31 and the electromagnetic wave-shielding layer 22 is formed on the side opposite to the adhesive layer 31.

It is desired that the adhering (sticking) strength of the back surface adhesive layer in the initial stage of bonding is 1 to 20 N/25 mm (1 to 20 N/1 inch), preferably, 1 to 15 N/25 mm, more preferably, 1 to 10 N/25 mm, and further preferably, 4 to 8 N/25 mm. This is because when the transparent laminate of the present invention is directly sticked as an optical filter to the display surface of the plasma display device, it may often become necessary to peel off the transparent laminate that is once sticked. For example, when the sticking position is not proper or when the filter is damaged after it was sticked, the optical filter must be peeled off to use the module again. For this purpose, therefore, the adhering (sticking) strength of the back surface adhering layer is better when it is weak, to some extent. It is further desired that the adhering (sticking) strength increases with the passage of time and, after having reached the equilibrium, is 5 to 25 N/25 mm and, preferably, 10 to 15 N/25 mm. Upon forming the adhesive layer having a relatively low adhesive (sticking) strength on the back surface of the second laminate portion of the transparent laminate of the invention, as described above, the work for peeling the transparent laminate is facilitated in case it must be peeled, and an expensive module body can be used again.

(Concrete examples of the near infrared ray-absorption layer)

In the transparent laminate of the present invention, it is desired that the near infrared ray-absorption layer contains a first infrared ray-absorbing coloring matter comprising at least one kind of a near infrared ray-absorbing diimonium compound constituted by a diimonum compound cation and a counter anion represented by the above chemical formula (1); a second near infrared ray-absorbing coloring matter comprising at least one kind of a coloring matter compound having a maximum absorption in a region of near infrared wavelengths of 750 to 950 nm and is different from the above diimonium compound; and a transparent resin containing a polymer of at least one kind of ethylenically unsaturated monomer; wherein not less than 30% by mass of said at least one kind of the ethylenically unsaturated monomer is the one represented by the above general formula (2).

As described above, it is desired to use the diimonium compound as the near infrared ray-absorbing coloring matter accompanied, however, by a problem in that when the diimonium compound is left to stand in a high-temperature and high-humidity atmosphere for extended periods of time, its composition avoidably undergoes degeneration.

The inventor of the present invention has studied the mechanism of degeneration of the diimonium compound in a high-temperature and high-humidity atmosphere, and have discovered that the degeneration stems from the decomposition of counter anions in the diimonium compound due to the presence of water in the film of resin composition and heat energy of heating. Further, when a near infrared ray-absorption layer contains a transparent resin prepared from a monomer that contains not less than 30% by mass of a particular monomer compound represented by the general formula (2) and a second near infrared ray-absorbing coloring matter which is a diimonium cationic compound having a particular counter anion of the chemical formula (1) with a maximum absorption in the near infrared region but substantially without absorption in the region of visible light, which is different from the first near infrared ray-absorbing coloring matter, the present inventors have discovered that there is exhibited little change in the color even after the near infrared ray-shielding layer is placed in a high-temperature and high-humidity atmosphere and is exposed to external light for extended periods of time, a high near infrared ray-shielding property is exhibited in a region of 850 to 1000 nm, characteristics of the near infrared ray-absorption layer are not deteriorated by heat, pressure or even by being brought in contact with the adhesive layer and, besides, the near infrared ray-shielding layer can be laminated and joined to the metal mesh layer.

(First near infrared ray-absorbing coloring matters)

In the transparent laminate of the present invention, it is desired that a compound constituted by a counter anion of the chemical formula (1) and a diimonium compound cation is used as the first near infrared ray-absorbing coloring matter. The diimonium cationic compound has a particular counter anion represented by the chemical formula (1). When a diimonium cationic compound is contained in the near infrared ray-absorption layer, therefore, the counter anion of the chemical formula (1) exhibits a strong resistance against the decomposition which is caused by the presence of water and the heat energy in heating, and suppresses the change in composition of the first coloring matter.

In order for the near infrared ray-absorption film formed by using the near infrared ray-absorption coating material to exhibit near infrared ray-absorption property to a practically sufficient degree, it is desired to control an average

transmission factor over wavelengths of 850 nm to 900 nm to be not larger than 20%. When only the diimonium compound is contained in the near infrared ray-absorption film, the near infrared ray-absorption property is not obtained to a sufficient degree in the region of the above wavelengths. Further, when the first near infrared ray-absorbing coloring matter is contained in an excess amount to improve the near infrared ray-absorption property, chromaticities x and y change in large amounts before and after the testing, which is not desirable.

To the coating material for forming the near infrared ray-absorption layer of the present invention, therefore, it is desired to add a second near-infrared ray-absorbing coloring matter having a maximum absorption over wavelengths 750 to 950 nm but substantially without absorption in the region of visible light. Upon forming a film containing the first near infrared ray-absorbing coloring matter and the second near infrared ray-absorbing coloring matter, the near infrared ray-shielding layer that is obtained exhibits excellent near infrared ray-shielding property in the region of near infrared rays of 850 nm to 1000 nm and, further exhibits an excellent transmission property even in the region of visible light.

(Second near infrared ray-absorbing coloring matters)

It is desired that the second near infrared ray-absorbing coloring matters used in the present invention have ratios of the absorption coefficient at a maximum absorption wavelength to the absorption coefficients at wavelengths of 450 nm (central wavelength of blue light), 525 nm (central wavelength of green light) and 620 nm (central wavelength of red light) of not smaller than 5.0 and, preferably, not smaller than 8.0. When the ratio to the absorption coefficient at any one of the wavelengths is smaller than 5.0, the transmission factor for visible light becomes smaller than 60% at any one of the wavelength 450 nm (central wavelength of blue light), 525 nm (central wavelength of green light) or 620 nm (central wavelength of red light) provided the average transmission factor at wavelengths 850 nm to 900 nm is not larger than 20%, and the transmission factor often becomes insufficient in the region of visible light.

As the second near infrared ray-absorbing coloring matter used in the present invention, there can be exemplified a dithiol metal complex compound, a phthalocyanine compound, a naphthalocyanine compound and a cyanine compound. In particular, the phthalocyanine compound can be preferably used since it excellently dissolves in an organic solvent.

In recent years, there have been proposed many phthalocyanine compounds having a maximum absorption in the region of near infrared rays by introducing a conjugated π-electron substituent such as a phenyl group or an electron-donating substituent such as an alkoxy group into the phthalocyanine skeleton. Among them, the phthalocyanine compound represented by the following general formula (4) has a ratio of the absorption coefficients of not smaller than 5.0, and can be preferably used for the present invention.

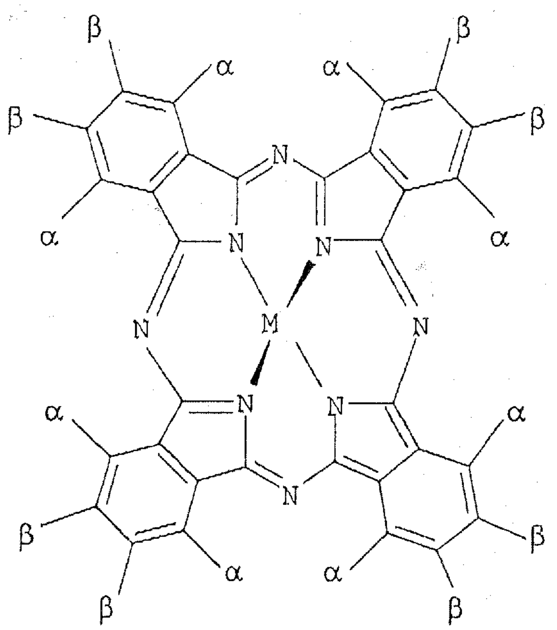

(4)

In the general formula (4), eight αs are, independently from each other, members selected from the groups $-SR^1$, $-OR^2$ and $-NHR^3$ and a halogen atom, at least one α being $-NHR^3$, eight βs are, independently from each other, at least members selected from $-SR^1$, $-OR^2$ and a halogen atom, at least one β being a group $-SR^1$ or $-OR^2$, at least ones of eight as and eight βs are a halogen atom and a group $-OR^2$; and

$R^1$, $R^2$ and $R^3$ are, independently from each other, members selected from phenyl groups having or without having a substituent, alkyl groups having 1 to 20 carbon atoms and aralkyl groups having 7 to 20 carbon atoms, and M is a member selected from a metal atom, one or more hydrogen atoms, a metal oxide and a metal halide.

As the first near infrared ray-absorbing coloring matter and as the second near infrared ray-absorbing coloring matter, there may be used two or more kinds of near infrared ray-absorbing coloring matter compounds, and there may be added any further coloring matters as required. It is desired that the mass ratio of blending the first near infrared ray-absorbing coloring matter and the second near infrared ray-absoxbing coloring matter is 3:2 to 29:1 and, more preferably, 2:1 to 9:1. When the blending ratio is smaller than 3/2, the light ray transmission factor often becomes insufficient in the region of visible light. When the blending ratio exceeds 29/1, on the other hand, the chromaticities often vary in large amounts before and after various kinds of reliability testing.

(Transparent resins for the near infrared ray-absorption layer)

It is desired that the transparent resin used for the coating material for forming the near infrared ray-absorption layer of the present invention contains a polymer of at least one kind of ethylenically unsaturated monomer, and that at least 30% by mass and, preferably, 50 to 100% by mass of the ethylenically unsaturated monomer forming the polymer is a monomer compound of the above general formula (2). The transparent resin having the above constitution dissolves well in a variety of organic solvents (e.g., toluene, xylene, ethyl acetate, butyl acetate, acetone, methyl ethyl ketone, mesoisobutyl ketone, cyclohexane and tetrahydrofuran), and is capable of forming a coating having a high moisture blocking property and high resistance to ultraviolet rays. In the monomer expressed by the general formula (2), it is desired that a cyclic hydrocarbon group with C6 to C25 represented by X is, for example, a cyclohexyl group, a methylcyclohexyl group, a cyclododecyl group, a bornyl group or an isobornyl group.

As the transparent resin obtained by polymerizing a monomer component containing not less than 30% by mass of the monomer component represented by the general formula (2), it is desired to use a methacrylate resin having a cyclic hydrocarbon group X with C6 to C25. When placed in a high-temperature and high-humidity condition for extended periods of time, the thermoplastic film made of a coating material obtained by dispersing the first and second near infrared ray-absorbing coloring matters in other general methacrylate resin such as methyl methacrylate resin, starts deteriorating due to water component in the environment accompanied by the degeneration of the first near-infrared ray-absorbing coloring matter causing a great change in the chromaticity of the coating. By using, as a transparent resin, a polymer which contains the monomer represented by the above general formula (2) as an essential component, on the other hand, the first near infrared ray-absorbing coloring matter exhibits improved durability under high-temperature and high-humidity conditions as well as improved resistance to ultraviolet rays.

In the present invention, further, it is desired that the transparent resin for the near infrared ray-absorption layer is a thermoplastic methacrylate resin. When there is used another thermosetting resin, ultraviolet ray-curable resin or electron ray-curable resin, the reaction activating group contained in the resin easily reacts with the diimonium compound used for the first near infrared ray-absorbing coloring matter, and the coloring matter is often decomposed in the resin composition or in the step of forming the coating.

It is desired that the content of the monomer compound expressed by the above general formula (2) relative to the whole amount of the monomers is not smaller than 30% by mass with respect to the total mass of the whole monomers used for forming the polymer. When the content thereof is smaller than 30%, a change in the chromaticity of the coating often cannot be suppressed to a sufficient degree, the change in the chromaticity being caused by the degeneration of the diimonium compound used for the first near infrared ray-absorbing coloring matter. The content of the monomer compound of the general formula (2) is, desirably, not smaller than 50% by mass and, more preferably, 80 to 100% by mass or greater.

The thermoplastic methacrylate resin containing the monomer compound represented by the above general formula (2) as an essential polymerization component can be easily synthesized by the solution polymerization in a general-purpose organic solvent, such as toluene, ethyl acetate, butyl acetate or methyl ethyl ketone. There can also be obtained a resin composition which is stable as a coating material and which permits the diimonium compound for the first near infrared ray-absorbing coloring matter and the transparent resin to dissolve to a high degree in the coating material.

It is desired that the transparent resin is obtained by polymerizing the monomer which contains not less than 30% by mass of the monomer compound expressed by the general formula (2), and has a glass transition point of not lower than 60°C but not higher than 120°C and, more preferably, 80 to 100°C. When the glass transition point is lower than 60°C, it happens that the resin is softened when the coating is exposed to high temperatures of not lower than 80°C for extended periods of time and, at the same time, the diimonium compound for the first near-infrared ray-absorbing coloring matter in the coating is easily degenerated causing a great change in the chromaticity of the coating, a drop in the near infrared ray-absorption property of the film and a drop in the heat resistance after the passage of long periods of time. However, the transparent resin having a glass transition temperature of not lower than 60°C makes it possible

to suppress the decomposition of the first and second near infrared ray-absorbing coloring matters and, particularly, of the diimonium compounds caused by heat. When the glass transition temperature exceeds 120°C, on the other hand, the obtained coating becomes hard and brittle causing such practical problems as a decrease in the resistance against bending and cracking that occurs during the handling.

It is desired that the transparent resin used in the present invention is a thermoplastic methacrylate resin having a glass transition temperature of not lower than 60°C but not higher than 120°C.

It is further desired that the transparent resin used for the near infrared ray-absorption layer of the present invention has a number average molecular weight of not smaller than 20,000 but not larger than 80,000 and a weight average molecular weight of not smaller than 200,000 but not larger than 400,000. The number and weight average molecular weights are measured by using a polystyrene standard GPC. When the weight average molecular weight is not larger than 200,000, the near infrared ray-shielding film that is formed often exhibits insufficient flexibility, poor resistance against bending and poor resistance against the chemicals. When the weight average molecular weight exceeds 400,000, on the other hand, it often becomes difficult to solution-polymerize the polymer itself. When the number average molecular weight is smaller than 20,000 or exceeds 80,000, on the other hand, the obtained polymer often exhibits insufficient resistance against the chemicals.

When the first transparent substrate is a polyester resin, further, it is desired that the transparent resin for the near infrared ray-absorption layer used in the present invention has a suitable degree of acid value stemming from a monomer that contains a carboxyl group. This improves the adhesion to the polyester resin film. This further works to improve stability over extended periods of time and to prevent deterioration in the characteristics such as exfoliation at the time of lamination. It is desired that the above suitable degree of acid value is not smaller than 1 mgKOH but is not larger than 20 mgKOH relative to the solid resin component. When the acid value is smaller than 1 mgKOH, the adhesion is not often sufficient between the film and the substrate. When the acid value exceeds 20 mgKOH, on the other hand, stability of the diimonium compound used for the first near infrared ray-absorbing coloring matter is often adversely affected at high temperatures.

Further, when the polyester resin is used as the first substrate, it is desired to form an adhesion-improving layer comprising an organic resin component on the substrate in order to improve practical adhesion to the near infrared ray-absorption layer. When no adhesion-improving layer is formed, the near infrared ray-shielding layer often tends to be defoliated on the interface between the polyester resin film and the near infrared ray-absorption layer.

The adhesion-improving layer that can be used for the present invention contains an organic resin component as a chief component. To suppress a change in the chromaticity while the near infrared ray-absorption laminate is being used, however, it is desired that the adhesion-improving layer contains no reactive curing agent.

There is no particular limitation on the organic resin component in the adhesion-improving layer so far as the adhesiveness is maintained to a practically sufficient degree between the near infrared ray-shielding layer and the polyester resin, and there can be used an acrylic resin, an acrylic/melanine copolymer resin, an acrylic/polyester copolymer or a polyester resin in a single kind or as a mixture of two or more kinds. Fine particles such as fine silica particles or talc may be contained in suitable amounts in the adhesion-improving layer in order to improve film take-up property in the step of coating, to prevent the occurrence of blocking and scratching.

When the adhesion-improving layer contains the reactive curing agent such as an isocyanate compound or a block isocyanate compound, the diimonium compound for the first near infrared ray-absorbing coloring matter in the near infrared ray-shielding layer tends to be degenerated upon reacting with the reactive curing agent when it is exposed to a high temperature of not lower than 80°C for extended periods of time adversely affecting the heat resistance over extended periods of time, such as greatly varying the chromaticity of the near infrared ray-shielding layer and/or decreasing the near infrared ray-absorption property.

In the coating material for forming the near infrared ray-absorption layer used in the present invention, it is desired that the dry solid component mass ratio of the total mass of the first and second near infrared ray-absorbing coloring matters to the transparent resin is in a range of 1:99 to 1:4 and, more preferably, 1:49 to 1:24. When the mass ratio is smaller than 1/99, it often becomes necessary to increase the thickness of the dry layer of the near infrared ray-shielding layer to be not smaller than 20 μm to obtain a high degree of near infrared ray-absorption efficiency. Often, however, it is difficult to form such a thick film. When the ratio exceeds 1/4, further, there occur such inconveniences as a drop of shielding performance and an increase in the haze value due to segregation of the infrared ray-absorbing coloring matter in the step of forming the near infrared ray-shielding film.

It is further desired that when the transparent laminate of the present invention is subjected to an aging acceleration testing in a high-humidity atmosphere of a temperature of 60°C and a relative humidity of 90% for 1000 hours, an aging acceleration testing in a high-temperature dry atmosphere of a temperature of 80°C and a relative humidity of not higher than 5% for 1000 hours, an aging acceleration testing in a high-temperature and high-humidity atmosphere of a temperature of 80°C and a relative humidity of 95% for 48 hours, and an aging acceleration weather-proof testing by being irradiated with light of an illumination of 550 $W/m^2$ by using a xenon lamp for 48 hours, the amounts of change in the chromaticities X and y of the near infrared ray-shielding laminate before and after the testing are not larger than

0.005 and, more preferably, 0 to 0.003. By using the laminate of the present invention having the above properties for various display devices such as a plasma display device, it is made possible to suppress the properties, such as near infrared ray-absorption property, visible light-transmission property and color tone, from being deteriorated for extended periods of time despite of a change in the temperature or in the humidity or despite of irradiation with external light, and images can be displayed maintaining stability for extended periods of time.

(Method of forming the near infrared ray-absorption layer)

The near infrared ray-shielding layer in the transparent laminate of the present invention can be formed by dissolving or dispersing the first near infrared ray-absorbing coloring matter, the second near infrared ray-absorbing coloring matter and the transparent resin in the solvent, applying the obtained solution or the dispersion onto one surface of the first transparent substrate, and drying and vaporizing the solvent. The coating method may be a customarily employed method which is carried out by using a coating device, such as a bar coater, a gravure reverse coater or a slit die coater.

(Shock-absorbing layer)

In the transparent laminate of the present invention, further, it is desired that a shock-absorbing layer is arranged between the first laminate portion and the second laminate portion. As shown, for example, in Fig. 2, a shock-absorbing layer 32 made of a shock-absorbing material may be laminated between the near infrared ray-shielding layer 13 and the adhesive layer 31 in the first laminate portion 61 and, as required, the shock-absorbing layer 32 and the near infrared ray-shielding layer 13 may be adhered together via an intermediate adhesive layer 31a. Or, a shock-absorbing material may be contained in the adhesive layer 31 between the near infrared ray-shielding layer 13 and the electromagnetic wave-shielding layer 22. When the transparent laminate of the present invention is directly stuck to the display surface of the plasma display device, the above constitution prevents a drop in the shock strength stemming from the absence of a glass which is used, in the conventional optical filter, as a glass panel. As the shock-absorbing material, there can be used a silicone rubber, an urethane rubber, a styrenebutadiene rubber, a nitrile rubber, a chloroprene rubber, an ethylene/propylene rubber, a butyl rubber, a fluorine-contained rubber, or an elastomer of a copolymer thereof, or a resin film such as of polyethylene, polyolefin or cellulose.

From the standpoint of an optical filter, it is desired that the shock-absorbing layer 32 has a thickness of 0.1 to 1.5 mm by taking the transmission factor and the haze into consideration. Concerning the characteristics of the shock-absorbing material, further, it is desired that the tensile strength is 6 to 10 MPa and the elongation at break is 150 to 400%.

(Description of the anti-reflection layer)

In the transparent laminate of the present invention as shown in Fig, 3, it is desired that the anti-reflection layer 12 formed on the first transparent substrate 11 of the first laminate portion includes a hard coated layer 51, an electrically conducting layer 52 of an intermediate refractive index laminated on the hard coated layer 51, a layer 53 of a high refractive index laminated on the electrically conducting layer 52 of an intermediate refractive index, and a layer 54 of a low refractive index laminated on the layer 53 of a high refractive index.

The thus constituted anti-reflection layer has electrically conducting property and is capable of preventing the adhesion of dust due to static electricity. Besides, the electrically conducting layer of an intermediate refractive index also works as the layer of an intermediate refractive index thereby forming a anti-reflection film including three layers of an intermediate refractive index, a high refractive index and a low refractive index, and exhibiting excellent effect for preventing reflection.

(Hard coated layer on the anti-reflection layer)

The hard coated layer laminated on the first transparent substrate is formed by using a resin component and desirably contains fine oxide particles. The fine oxide particles that are contained help improve adhesiveness to the first transparent substrate. Adhesiveness is particularly important for the anti-reflection layer of the present invention so that the first transparent substrate and the second transparent substrate are not defoliated or scratched when stuck together.

It is desired that the content of the fine oxide particles in the hard coated layer is 30% by mass to 80% by mass. When the content of the fine oxide powder is smaller than 30% by mass, the adhesiveness drops relative to the first transparent substrate or to the layer of the intermediate refractive index, and there are not obtained a desired pencil hardness and a film hardness such as steel wool strength. When the content of the fine oxide powder is not smaller than 80% by mass, the content of the fine oxide powder becomes excessive causing such problems as a drop in the film strength of the obtained hard coated layer, whitening of the obtained hard coated layer, and a drop of bending property

of the film after it is cured.

It is desired that the refractive index of the hard coated layer is the same as the average refractive index of the surface of the first transparent substrate. Namely, upon decreasing a difference in the amplitude of the reflection factor generated due to a difference between the average refractive index of the surface of the first transparent substrate and the refractive index of the hard coated layer, the so-called "rainbow color shading on the surface" becomes less conspicuous. When there is used a PET film with an easily adhesive layer as the first transparent substrate, however, it is desired that the refractive index of the hard coated layer is brought to be the same as, or close to, the refractive index calculated by the following formula,

$$N = Np - (Ns - Np)/2$$

N: refractive index of the transparent hard coated layer,
Np: refractive index of the easy adhesive PET layer,
Ns: average refractive index on the surface of the PET substrate.

As the fine oxide particles used in the hard coated layer, there can be suitably used a silicon oxide, an aluminum oxide, an antimony oxide, a tin oxide, a zirconium oxide, a tantalum oxide, a cerium oxide or a titanium oxide making it possible to form a hard coated layer having excellent transparency without coloring the hard coated layer. It is desired that the fine oxide particles have a particle size of not larger than 100 nm. This is because, when the fine oxide powder has particle sizes in excess of 100 nm, the obtained hard coated layer causes light to be scattered to a conspicuous degree due to Reyleigh scattering and appears to be white to decrease the transparency.

As the resin component, there can be exemplified an ultraviolet ray-curable resin, an electron ray-curable resin and a cationically polymerized resin. Among them, the ultraviolet ray-curable resin is preferably used since it is inexpensive and exhibits excellent adhesiveness to the transparent plastic film. The ultraviolet ray-curable resin may be a photosensitive resin used in the coating method (wet coating method), and there can be preferably used an acrylic resin, an acrylic urethane resin, a silicone resin and an epoxy resin without spoiling dispersion of the fine oxide powder.

In the present invention, the hard coated layer in the anti-reflection layer is formed by, for example, applying a coating material for forming a hard coated layer containing at least an organic resin component, fine oxide particles and an organic solvent, onto the first transparent substrate, followed by drying and irradiation with ultraviolet rays.

The coating material for forming the transparent hard coated layer can be obtained as an organic solvent-type coating material by mixing and dispersing the fine oxide particles and the resin component in an organic solvent by using a dispersant relying on an ordinary method using an ultrasonic dispersing machine, a homogenizer or a sand mill. The above organic solvent can be selected from alcohols, glycols, acetic esters and ketones, which may be used in a single kind or being mixed together in two or more kinds.

A coating material for forming the hard coated layer is applied onto one surface of the first transparent substrate, and is crosslinked and cured by the irradiation with ultraviolet rays thereby to form a hard coated layer. It is desired that the thickness of the hard coated layer is 0.5 μm to 20 nm and, preferably, 0.5 to 2 μm. When the film thickness is not larger than 0.5 μm, the film hardness is not exhibited to a sufficient degree. When the film thickness is not smaller than 20 μm, on the other hand, the first transparent substrate is curled to a large extent.

There can be employed various coating methods such as bar coating method, gravure coating method, slit coater method, roll coater method and dip coating method.

(Electrically conducting layer of an intermediate refractive index)

The electrically conducting layer of an intermediate refractive index formed on the hard coated layer, preferably, has electric conductivity and contains fine particles of an intermediate refractive index and a binder component.

It is desired that the content of the electrically conducting fine particles having an intermediate refractive index in the electrically conducting layer of an intermediate refractive index is not smaller than 50% by mass and, particularly, is in a range of 70 to 95%. When the content of the electrically conducting fine particles of an intermediate refractive index is smaller than 50% by mass, the surface resistance of the electrically conducting layer 3 of an intermediate refractive index increases to adversely affect the electric conductivity, and the filler component decreases often causing the adhesiveness to become insufficient relative to the hard coated layer. When the content of the electrically conducting fine particles of an intermediate refractive index exceeds 95% by mass, on the other hand, the content of the binder component relatively decreases making it difficult to hold the electrically conducting fine particles of an intermediate refractive index in sufficient amounts in the binder matrix and, besides, permitting the film to be easily scratched when another layer is applied onto the electrically conducting layer of an intermediate refractive index and hence exhibiting

poor appearance.

As the electrically conducting fine particles having an intermediate refractive index, there can be used fine metal particles such as of antimony-containing tin oxide (hereinafter abbreviated as ATO), tin-containing indium oxide (hereinafter abbreviated as ITO), aluminum-containing zinc oxide, gold, silver or palladium from the standpoint of forming an electrically conducting layer of an intermediate refractive index having excellent transparency and electrically conducting property.

It is further desired that the electrically conducting fine particles of an intermediate refractive index have an average particle size of 1 to 100 nm. When the average particle size is smaller than 1 nm, the fine particles tend to be aggregated when the coating material is being prepared and cannot be homogeneously dispersed at the time of preparing the coating material. Further, the coating material exhibits an increased viscosity and is often poorly dispersed. When the average particle size of the electrically conducting fine particles having an intermediate refractive index exceeds 100 nm, on the other hand, the obtained electrically conducting layer of an intermediate refractive index irregularly reflects light to a conspicuous degree due to Reyleigh scattering and appears to be whitish to decrease the transparency.

As the binder component, there is preferably used a substance formed by using a silicon alkoxide and/or a hydrolyzed product.

In the transparent laminate of the present invention, the electrically conducting layer of an intermediate refractive index can be formed by applying a coating material for forming the electrically conducting layer of an intermediate refractive index containing at least electrically conducting fine particles of an intermediate refractive index, a silicon alkoxide and/or a hydrolyzed product thereof and an organic solvent, onto the hard coated layer 51, followed by drying.

The coating material for forming the electrically conducting layer of an intermediate refractive index can be obtained as an organic solvent-type coating material by dispersing, in an organic solvent, the electrically conducting fine oxide particles of an intermediate refractive index, a silicon alkoxide and/or a hydrolyzed product thereof and, depending upon the cases, other particles by using a dispersant relying on an ordinary method using an ultrasonic dispersing machine, a homogenizer or a sand mill.

The silicon alkoxide can be selected from, for example, a tetraalkoxysilane compound and an alkyltrialkoxysilane compound. Further, the above organic solvent can be selected from alcohols, glycols, acetic esters and ketones, which may be used in a single kind or being mixed together in two or more kinds.

It is desired to apply the coating material for forming the electrically conducting layer of an intermediate refractive index onto the transparent hard coated layer, and dry it at, for example, 70 to 130°C for not less than one minute to adjust the thickness of the optical film to lie in a range of 140 $\pm$ 30 nm.

It is not desired that the drying temperature exceeds 130°C because the transparent plastic film undergoes the thermal deformation depending upon its kind. When the temperature is lower than 70°C, further, the curing rate becomes small and the strength is not obtained. When the curing time is shorter than one minute, further, the film strength becomes insufficient, which is not desirable.

The coating method can be suitably selected from, for example, bar coating method, gravure coating method, slit coater method, roll coater method and dip coating method.

(High refractive index layer)

The high refractive index layer formed on the electrically conducting layer of an intermediate refractive index contains, for example, fine oxide particles of a high refractive index and a binder component.

It is desired that the content of the fine oxide particles of a high refractive index in the layer of a high refractive index is not lower than 50% by mass and, particularly, not lower than 60 to 95% by mass. When the content of the fine oxide particles of a high refractive index is smaller than 50%, the content of the binder component increases relatively and causes a drop in the refractive index, making it difficult to obtain a sufficiently large change in the refractive index and resulting in an excessive increase in the reflection factor. When the content of the fine oxide particles of a high refractive index exceeds 95%, on the other hand, the fine oxide particles of a high refractive index are not sufficiently fixed by the binder component and, besides, the transparent layer of a high refractive index tends to be scratched when another layer is to be applied thereon to exhibit poorer appearance.

As the fine oxide particles of a high refractive index, there can be preferably used a cerium oxide, a zinc oxide, a zirconium oxide, a titanium oxide or a tantalum oxide from the standpoint of forming a layer 53 of a high refractive index featuring excellent transparency.

It is further desired that the fine oxide particles of a high refractive index has an average particle size of 1 to 100 nm. When the average particle size is smaller than 1 nm, the fine particles tend to be aggregated when the coating material is being prepared and cannot be homogeneously dispersed at the time of preparing the coating material. Further, the coating material exhibits an increased viscosity and is often poorly dispersed. When the average particle size of the fine oxide particles having a high refractive index exceeds 100 nm, on the other hand, the obtained layer of a high refractive index irregularly reflects light to a conspicuous degree due to Reyleigh scattering and appears to be whitish

decreasing the transparency.

As the binder component, there is preferably used a substance formed by using a silicon alkoxide and/or a hydrolyzed product.

The high refractive index layer of the present invention can be formed by applying a coating material for forming the layer of a high refractive index containing at least fine oxide particles of a high refractive index, a binder component and an organic solvent, onto the electrically conducting layer of an intermediate refractive index followed by drying.

The coating material for forming the layer of a high refractive index can be obtained as an organic solvent-type coating material by dispersing, in an organic solvent, the fine oxide particles of a high refractive index, a silicon alkoxide and/or a hydrolyzed product thereof and, depending upon the cases, other particles by using a dispersant relying on an ordinary method using an ultrasonic dispersing machine, a homogenizer or a sand mill.

The silicon alkoxide can be selected from, for example, a tetraalkoxysilane compound and an alkyltrialkoxysilane compound. Further, the above organic solvent can be selected from alcohols, glycols, acetic esters and ketones, which may be used in a single kind or being mixed together in two or more kinds.

The coating material for forming the high refractive index layer is applied onto the electrically conducting layer of an intermediate refractive index, and is dried at, for example, 70 to 130°C for not less than one minute to form the layer of a high reflective index. It is desired that the thickness thereof is set to be 1.2 to 2.5 times as great as the optical film thickness of the low refractive index layer, In designing the thickness of the reflection preventing film, it is a generally accepted practice to set the thicknesses of the high refractive index layer and of the low refractive index layer to be 1/4 the wavelength (hereinafter called bottom wavelength) at which the target lowest reflection factor is exhibited. When the anti-reflection film is formed according to the above method, the reflection factor of the resultant anti-reflection film becomes the smallest at the bottom wavelength but, instead, increases toward the side of longer wavelengths and toward the side of shorter wavelengths producing intensified reflection colors in that areas, i.e., producing intense bluish violet to reddish violet reflection colors. This, further, causes an increase in the visual reflection factor which is an index of the reflection factor as viewed by eye. The study was forwarded in an attempt to suppress an increase in the reflection factor on the side of longer wavelengths and on the side of shorter wavelengths, and the problem was solved by increasing the optical film thickness of the low refractive index layer by 1.2 to 2.5 times, which is thicker than the thickness realized by a traditional method.

When the drying temperature exceeds 130°C, the transparent plastic film often undergoes the thermal deformation depending upon its kind. When the temperature is lower than 70°C, further, the curing rate becomes low and strength is not obtained to a sufficient degree. When the curing time is shorter than one minute, further, the film strength becomes insufficient.

The coating method can be suitably selected from, for example, bar coating method, gravure coating method, slit coater method, roll coater method and dip coating method.

Low refraction index layer

The low refractive index layer laminated on the high refractive index layer is formed by applying a coating material for forming the layer of a low refractive index that contains, for example, a silicon alkoxide and/or a hydrolyzed product thereof, a silicone oil and an organic solvent, onto the layer of a high refractive index followed by drying.

It is desired that the refractive index of the low refractive index layer is smaller, by not less than 0.1, than the refractive index of the high refractive index layer. By providing the transparent layer of a low refractive index, the anti-reflection layer that is obtained exhibits very excellent anti-reflection property. The silicon alkoxide used as the coating material for forming the layer of a low refractive index, can be suitably selected from a tetraalkoxysilane compound and an alkyltrialkoxysilane compound.

As the silicone oil, there can be suitably used a dialkylalkoxysilane compound. Further, the above organic solvent can be selected from alcohols, glycols, acetic esters and ketones, which may be used in a single kind or being mixed together in two or more kinds.

When a silicone oil is contained in an amount of 0.01 to 5.0% by mass in the coating material for forming the transparent layer of a low refractive index, the contact angle of the film relative to the water becomes not smaller than 90° to exhibit a water-repelling property and to become slippery. Namely, the transparent film having antistatic and anti-reflection properties exhibits an increased strength (particularly steel wool strength) and, besides, a contamination-preventing property can be imparted thereto.

When the content of the silicone oil is smaller than 0.01% by weight, the silicone oil does not ooze out to a sufficient degree on the surface of the transparent layer having a low refractive index, the contact angle to the water becomes smaller than 90°, the water-repelling property is not exhibited to a sufficient degree, and the transparent film having antistatic and anti-reflection properties fails to exhibit an increased strength and strain-preventing property. When the content exceeds 5.0% by mass, the silicone oil becomes excessive on the surface of the transparent layer of a low refractive index and, hence, the contact angle to the water exceeds 90° and the water-repelling property is exhibited to

a sufficient degree impairing, however, the polymerization curing reaction of the silicon alkoxide and/or the hydrolyzed product thereof and decreasing the strength of the transparent film having antistatic and anti-reflection properties.

The low refractive index layer is formed by applying a coating material for forming the transparent layer of a low refractive index onto the transparent layer having a high refractive index followed by drying at, for example, 70 to 130°C for not less than one minute to adjust the thickness of the optical film to be 140 nm. There is thus prepared a film having antistatic and reflection-preventing properties near a bottom wavelength of 600 nm.

It is not desired that the drying temperature exceeds 130°C because the transparent plastic film often undergoes the thermal deformation. When the temperature is lower than 70°C, further, the curing rate becomes small and the strength is not obtained. When the curing time is shorter than one minute, further, the film strength becomes insufficient.

The coating method can be suitably selected from, for example, the bar coating method, gravure coating method, slit coater method, roll coater method and dip coating method.

The antistatic and anti-reflection film prepared by the above method has favorable antistatic effect and anti-reflection effect, has a large hardness and stain-preventing property. The reasons are considered to be as described below.

By making present an inorganic compound filler in large amounts in the transparent hard coated layer, in the transparent electrically conducting layer having an intermediate refractive index and in the transparent layer having a high refractive index, the surface energy of the layers can be increased to greatly improve the wettability of the coating materials onto the surfaces of the layers. Due to the improved wettability, the adhesion is improved among the layers, and there is obtained a film strength greater than that of any conventional film.

The silicone oil is contained in the transparent layer having a low refractive index, which is the outermost layer, exhibiting a contact angle to the water of not smaller than 90° and water-repelling property. The water-repelling effect is sufficiently maintained even when rubbed with a cotton fabric or the like, and a good stain-preventing property is obtained. The reason why the stain-preventing property lasts is presumably because the silicone oil is taken into the silica matrix and does not ooze out easily.

(Metal mesh layer)

In the transparent laminate of the present invention, the electromagnetic wave-shielding layer which is a metal mesh layer in the second laminate portion, has been blackened to suppress the reflection on the surface of the metal mesh and to prevent the easiness of watching from being adversely affected by the metallic color of luster.

As the blackening method, there can be employed a method of electrolytically plating a blackening metal, such as Ni, Sn or Ni-Sn alloy, or a method of blacking the metal surfaces by oxidation or vulcanization.

In the transparent laminate of the present invention, further, it is desired that the metal mesh layer has a thickness of 1 to 15 μm and, more preferably, 1 to 10 μm. When the thickness of the metal mesh layer becomes too great, the angle of visual field becomes narrow often adversely affecting the ease of watching.

(General method of production)

The transparent laminate of the present invention is produced by forming the anti-reflection layer on the first transparent substrate by the above method, and forming the near infrared ray-absorption layer on the back surface thereof by the above method. The metal mesh layer is formed on the second transparent substrate by the above method, The first laminate portion including the thus formed first transparent substrate, anti-reflection layer and near infrared ray-absorption layer, is laminated and joined on the side of the near infrared ray-shielding layer onto the side of the metal mesh layer of the second laminate portion that includes the second transparent substrate and the metal mesh layer, via the adhesive layer. The lamination is accomplished by a method that is usually used for sticking a panel and a film or for sticking a film and a film, such as a method that uses a roll laminator or a method that uses a sheet laminator. Heating and Pressing may be suitably effected between the above steps. After the sticking, it is desired to carry out a step of defoaming for providing transparency. The defoaming can be effected by applying pressure or under a reduced pressure, but is desirably effected by applying pressure. The adhesive layer may contain a coloring material for adjusting the color tone or the transmission factor.

It is desired that the metal mesh layer used for the transparent laminate of the present invention is formed by printing an ink containing a catalyst onto the second transparent substrate in a pattern of mesh, and electroless plating and/or electroplating a metal onto the ink image. It is desired to use copper as a metal to be plated. It is further desired that after the metal is precipitated by electroless plating, the metal is, further, precipitated by electroplating. If a thin film of silver or indium-containing tin oxide (ITO) is formed by sputtering on the substrate according to a customary manner, the metal mesh layer exhibits insufficient electromagnetic wave-shielding ability which cannot pass the Class B Standards specified by the Voluntary Control Council for Interference by Information Technology Equipment (VCCI). The printing method is not limited to the screen printing method or the gravure printing method, but is desirably the screen printing

method.

The conventional method of forming a metal mesh can be represented by a method which laminates thin copper onto a fiber mesh that is obtained by plating copper onto a support member comprising chiefly a fiber, or laminating thin copper on a resin film which is a substrate, or a method of forming an etching mesh by patterning a sheet having a surface plated with copper into the shape of a mesh by etching. According to the former method, the wire diameter of mesh is as thick as about 20 to 50 μm deteriorating the transmission factor and developing interference fringes. According to the latter method which etches the copper foil of a thickness of about 10 to 20 μm, the thickness of the metal mesh layer is so thick that the angle of visual field is narrowed adversely affecting the ease of watching. Even if the surface of the copper foil is blackened, further, the color tone specific to copper is exposed in the direction of depth of etching when viewed from a tilted direction, adversely affecting the color tone on the screen.

The metal mesh layer obtained by the above method of the present invention has a small thickness yet exhibits a sufficient degree of electric conductivity. In particular, it is desired that the thickness is 1 to 15 μm and, more desirably, 1 to 10 μm. This thickness makes it possible to obtain a metal mesh layer having a surface resistance of 0.01 to 0.5 Ω/□ and a transmission factor of 70 to 90%. Therefore, the metal mesh layer obtained by the above method of the present invention offers a wide angle of visual field and improved ease of watching without exposing color tone specific to a metal in the direction of depth of the metal mesh when the surface is blackened and without adversely affecting the color tone on the screen.

Upon directly sticking the transparent laminate of the present invention onto the front glass of the PDP module, the weight of the PDP can be greatly decreased. The mass of glass used in the conventional optical filter is about 4.5 kg when the size is 106.6 cm (42 inches), and becomes as great as about 5 kg when the size is 127 cm (50 inches). By removing the glass from the conventional optical filter, therefore, a wall-hung TV, which is expected from the use of a PDP, can be easily realized.

When the transparent laminate of the present invention is used as an optical filter as shown in Fig. 4, it is desired that the first laminate portion 61 and the second laminate portion 62 are stuck together like a picture frame to maintain a portion 22a for taking out an electrode of the metal mesh layer for grounding.

Fig. 5 illustrates a constitution (partly in cross section) for mounting the transparent laminate of the present invention on the PDP. The transparent laminate 1 of the present invention is directly stuck to a display surface 73 of a PDP module 71. The portion 22a for taking out the electrode of the electromagnetic wave-shielding film maintained by sticking the first laminate portion 61 onto the second laminate portion 62 like a picture frame, is directly joined to a housing 72 of the module 71 or is mounted thereon maintaining electric conduction by using a clip, a clamp or a gasket (not shown). An image formed on the transparent laminate is observed by an observer 74 from a direction 75 indicated by an arrow.

Example 1

By using a PET film of a thickness of 100 μm as a first transparent substrate, there was formed, on one surface thereof, an anti-reflection layer comprising a hard coated layer, an electrically conducting layer of an intermediate refractive index, a high refractive index layer and a low refractive index layer, and there was formed, on the opposite surface thereof, a near infrared ray-absorption layer including a transparent resin obtained by polymerizing a diimonium coloring matter which is a diimonium compound having a counter anion expressed by the chemical formula (1), a phthalocyanine coloring matter (trademark: EXCOLOR IR-10A produced by Nihon Shokubai Co.) and a monomer component which contains 50 parts by weight of a monomer of the formula (2) in which X is an isobornyl group, to thereby provide a first laminate portion. The diimonium coloring matter and the phthalocyanine coloring matter were blended at a weight ratio of 2:1.

Next, onto a PET film of a thickness of 125 μm as a second transparent substrate, there was printed a paste containing a palladium colloid by using a screen having a lattice (mesh) pattern of L/S = 30/270 (μm), and the printed film was, then, immersed in an electroless copper-plating solution to apply a electroless plating with copper thereonto, followed by electroplating copper and then by further electroplating an Ni-Sn alloy, to thereby provide a second laminate portion.

Thereafter, transparent adhesive layers each having a thickness of 25 μm were formed on the surface of the first transparent substrate on the side opposite to the near infrared ray-absorption layer in the first laminate portion and on the surface of the second transparent substrate on the side opposite to the electromagnetic wave-shielding layer in the second laminate portion. The near infrared ray-absorption layer in the first laminate portion and the electromagnetic wave-shielding layer in the second laminate portion were stuck together, and were pressurized under a pressure of 0.45 MPa for 30 minutes to produce a transparent laminate.

The obtained transparent laminate was evaluated for its "total light transmittance factor", "haze", "luminous reflectance", "pencil hardness", "steel wool hardness", "adhesiveness", "spectroscopic transmittance (near infrared portion)", "reliability testing (change in the transmittance of the near infrared portion after put to high temperatures and high

humidifies for 1000 hours)" and "electromagnetic wave-shielding property" by the following method. The results of evaluation were as shown in Table 1.

(Method of evaluation)

(1) Total light transmittance: Measured by using a haze meter (manufactured by NIPPON DENSHOKUKOGYO Co. LTD.).
(2) Luminous reflectance: Measured by using a spectrophotometer (V-570, manufactured by JASCO CORPORATION).
(3) Pencil hardness: With the anti-reflection layer being faced upward, a minimum pencil hardness free from scratched under a load of 1 kg was measured.
(4) Steel wool hardness: With the anti-reflection layer being faced upward, a load of 250 g/cm$^2$ was placed on a #0000 steel wool, and the number of scratches was counted after the load was reciprocally moved 10 times.
(5) Adhesiveness: With the anti-reflection layer facing upward, each side of a square of 1 cm of the film surface was cut maintaining a distance of 1 mm and the surfaces thereof were put to the peeling testing three times by using an adhesive tape, and the number of squares remaining was counted.
(6) Spectroscopic transmittance: By using a spectrophotometer (V-570, manufactured by Nihon Bunko Co.), the samples were measured for their transmittance at wavelengths of 850 nm, 950 nm and 1000 nm.
(7) Reliability:

(i) The samples were introduced into a constant-temperature vessel maintained at 80°C, and were measured for their spectral transmission factors after the passage of 1000 hours.
(ii) The samples were introduced into a constant-temperature/constant-humidity vessel maintained at 60°C and a relative humidity of 90%, and were measured for their spectral transmission factors after the passage of 1000 hours.

(8) Electromagnetic wave-shielding property: Measured in accordance with the method of KEC (method specified by Kansai Electronic Industry Development Center).

Table 1

| Item | Example 1 | | |
|---|---|---|---|
| Total light transmittance | 42% | | |
| Luminous reflectance | 1.0% | | |
| Pencil hardness | 3H or higher | | |
| Steel wool hardness | no scratch | | |
| Adhesiveness | 100/100 | | |
| Spectroscopic transmittance/reliability | 0 hr | 80°C/1000 hrs | 60°C-90%/1000 hrs |
| /850 nm | 5.4% | 6.7% | 6.4% |
| /950 nm | 1.7% | 2.6% | 2.9% |
| /1000 nm | 1.6% | 2.4% | 2.8% |
| Electromagnetic wave-shielding property | 50 dB or higher | | |

(Test results)

From the results of test of the above Example, it was confirmed that the transparent laminate of the present invention exhibits excellent transmittance low reflection, electromagnetic wave-shielding property and near infrared ray-absorption property, as well as excellent durability.

INDUSTRIAL APPLICABILITY

The present invention provides a transparent laminate having an excellent anti-reflection property, a near infrared ray-absorption property, an electromagnetic wave-shielding property, excellent durability and visibility of visual image, and a method of producing the same. The transparent laminate is light in weight, can be easily produced and

easily handled, and can be used as an optical filter for a display device such as a plasma display device and offers high practicability.

## Claims

1. A transparent laminate comprising a first laminate portion including a first transparent substrate, an anti-reflection layer formed on one surface thereof, and a near infrared ray-absorption layer formed on the other surface thereof; a second laminate portion including a second transparent substrate and an electromagnetic wave-shielding layer formed on one surface thereof; and an adhesive layer for joining the near infrared ray-absorption layer in said first laminate portion to said second laminate portion.

2. A transparent laminate according to claim 1, wherein said electromagnetic wave-shielding layer is a metal mesh layer.

3. A transparent laminate according to claim 1, wherein the near infrared ray-absorption layer in said first laminate portion is joined to the electromagnetic wave-shielding layer in said second laminate portion.

4. A transparent laminate according to claim 1, wherein said second laminate portion further has a back surface adhesive layer formed on the other surface of said second transparent substrate.

5. A transparent laminate according to claim 4, wherein the back surface adhesive layer of said second laminate portion has an adhering strength of 1 to 20 N/25 mm.

6. A transparent laminate according to claim 1, wherein the near infrared ray-absorption layer in said first laminate portion includes:

   a first near-infrared ray-absorbing coloring matter comprising at least one kind of a near-infrared ray-absorbing diimonium compound;
   a second near-infrared ray-absorbing coloring matter comprising at least one kind of a coloring matter compound having a maximum absorption in a region of near-infrared wavelengths of 750 to 950 nm and is different from said diimonium compound; and
   a transparent resin containing a polymer of at least one kind of ethylenically unsaturated monomer;

   wherein at least 30% by mass of the ethylenically unsaturated monomer constituting said polymer for the transparent resin is a monomer represented by the following general formula (2):

$$CH_2 = C(R) - CO - OX \qquad (2)$$

   [wherein in the above formula (2), R is a hydrogen atom or a methyl group, and X is a cyclic hydrocarbon group having 6 to 25 carbon atoms].

7. A transparent laminate according to claim 6, wherein the near-infrared ray-absorbing diimonium compound for said first infrared ray-absorbing coloring matter contained in the near infrared ray-absorption layer in said first laminate portion, is constituted by a diimonum compound cation and a counter anion represented by the following chemical formula (1):

$$(CF_3SO_2)_2N^- \qquad (1)$$

8. A transparent laminate according to claim 6 or 7, wherein the near-infrared ray-absorbing diimonium compound for said first near-infrared ray-absorbing coloring matter contained in the near infrared ray-absorption layer in said first laminate portion, is expressed by the following chemical formula (3):

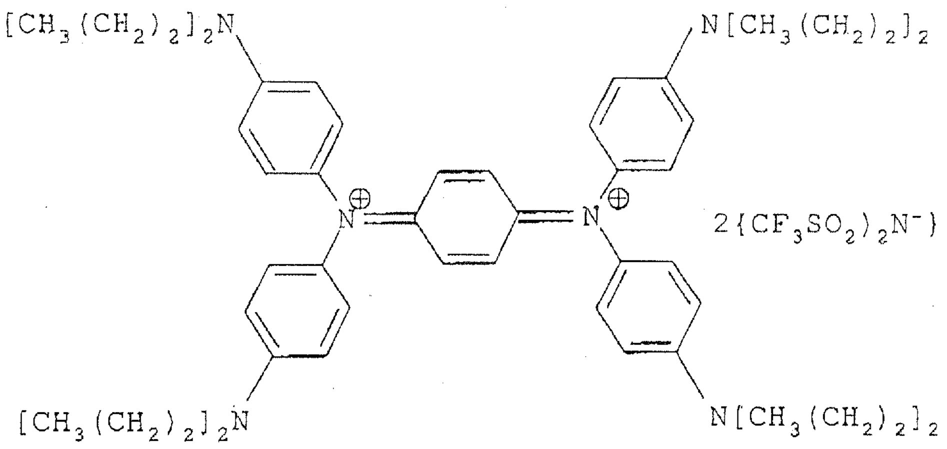

(3)

**9.** A transparent laminate according to claim 6, wherein said transparent resin contained in the near infrared ray-absorption layer in said first laminate portion, has a glass transition temperature of 60 to 120°C, a number average molecular weight of 20,000 to 80,000, and a weight average molecular weight of 200,000 to 400,000.

**10.** A transparent laminate according to claim 1, wherein said anti-reflection layer in said first laminate portion is constituted by a hard coated layer, an electrically conducting layer of an intermediate refractive index laminated on the hard coated layer, a layer of a high refractive index laminated on said electrically conducting layer of an intermediate refractive index, and a layer of a low refractive index laminated on the layer of a high refractive index.

**11.** A transparent laminate according to claim 10, wherein said hard coated layer included in said anti-reflection layer contains fine oxide particles and a binder component, and the content of said fine oxide particles is not smaller than 30% by mass.

**12.** A transparent laminate according to claim 2, wherein said metal mesh layer included in said second laminate portion includes a metal mesh having a surface that is blackened by being electrolytically plated with a black metal.

**13.** A transparent laminate according to claim 1, wherein said electromagnetic wave-shielding layer has a thickness of 1 to 15 μm.

**14.** A transparent laminate according to claim 1, wherein a shock-absorbing layer is further included between the near infrared ray-absorption layer in said first laminate portion and said adhesive layer.

**15.** A method of producing a transparent laminate by forming an anti-reflection layer on one surface of a first transparent substrate and, thereafter, forming a near infrared ray-absorption layer on the other surface of the first transparent substrate thereby to form a first laminate portion, separately forming a metal mesh layer on one surface of a second transparent substrate to form a second laminate portion, and adhering the near infrared ray-absorption layer in said first laminate portion and the metal mesh layer in said second laminate portion together via an adhesive layer to form a laminate.

**16.** A method of producing a transparent laminate according to claim 15, wherein an image having a desired mesh pattern is printed on one surface of the second transparent substrate by using an ink containing a catalyst to form a metal mesh layer of said second laminate portion, said printed surface is subjected to a electroless plating and/or an electroplating, so that the metal precipitates according to the pattern of said catalyst-containing ink image and is deposited on said second transparent substrate.

Fig. 1

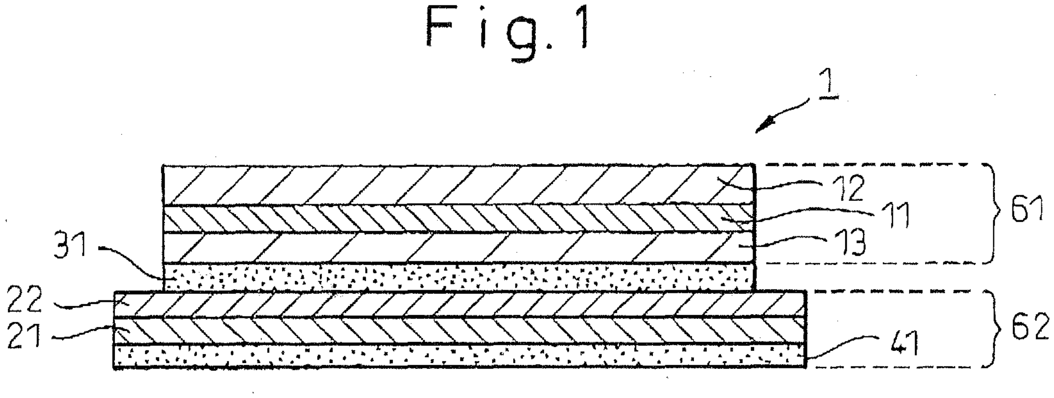


Fig. 2

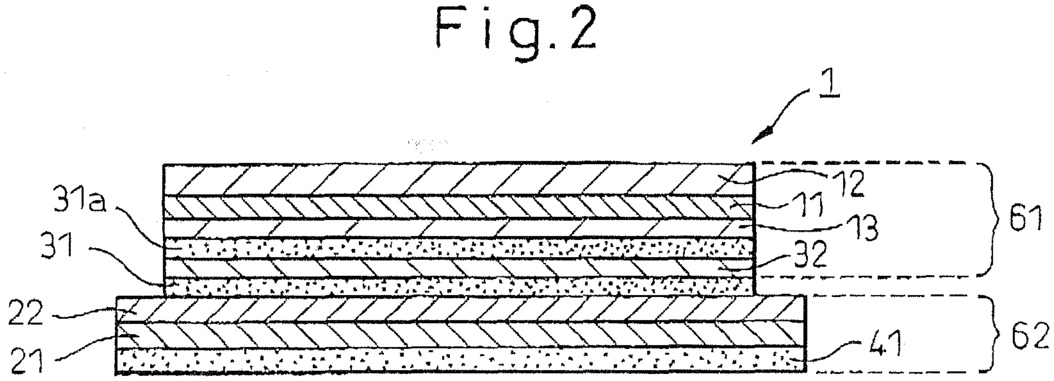


Fig. 3

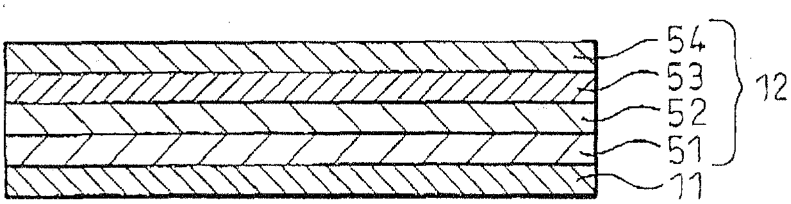

Fig. 4

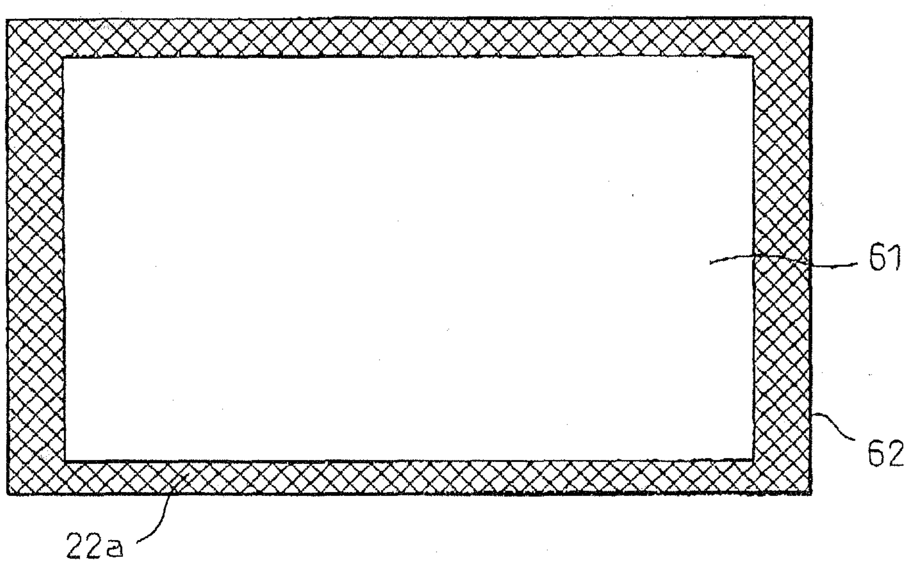


Fig. 5

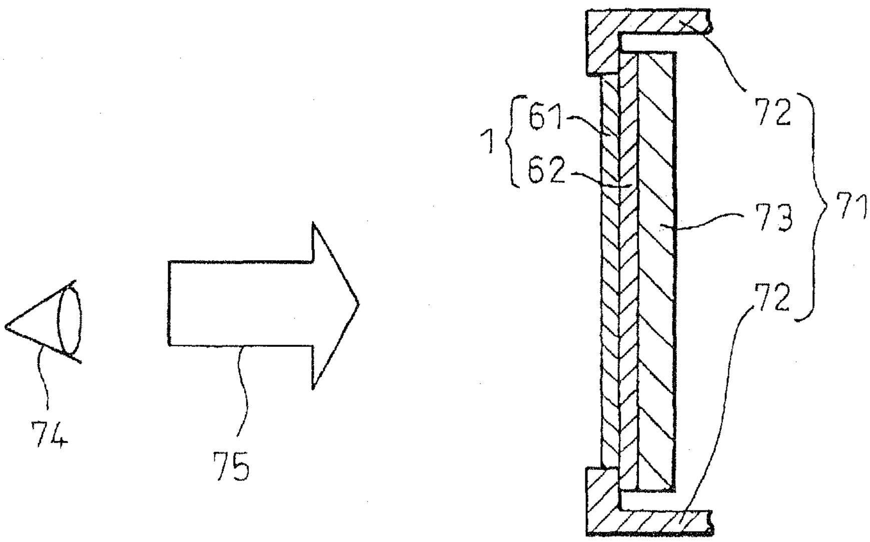

**INTERNATIONAL SEARCH REPORT**

International application No.
PCT/JP2005/002676

A. CLASSIFICATION OF SUBJECT MATTER
Int.Cl$^7$ G09F9/00

According to International Patent Classification (IPC) or to both national classification and IPC

B. FIELDS SEARCHED

Minimum documentation searched (classification system followed by classification symbols)
Int.Cl$^7$ G09F9/00-9/46, B32B1/00-35/00, G02B5/20-5/28, H05K9/00

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2005 |
| Kokai Jitsuyo Shinan Koho | 1971-2005 | Jitsuyo Shinan Toroku Koho | 1996-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2003-195774 A (Sumitomo Chemical Co., Ltd.), 09 July, 2003 (09.07.03), Full text; all drawings (Family: none) | 1-16 |
| Y | JP 11-065464 A (Nitto Denko Corp.), 05 March, 1999 (05.03.99), Full text; all drawings (Family: none) | 1-16 |
| A | JP 2003-316276 A (Matsushita Electric Industrial Co., Ltd.), 07 November, 2003 (07.11.03), Full text; all drawings & US 2003/0211333 A1 | 1-16 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 16 March, 2005 (16.03.05) | 05 April, 2005 (05.04.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

INTERNATIONAL SEARCH REPORT

International application No.
PCT/JP2005/002676

C (Continuation). DOCUMENTS CONSIDERED TO BE RELEVANT

| Category* | Citation of document, with indication, where appropriate, of the relevant passages | Relevant to claim No. |
|---|---|---|
| A | JP 2003-227922 A (Sumitomo Metal Mining Co., Ltd.), 15 August, 2003 (15.08.03), Full text; all drawings (Family: none) | 1-16 |
| A | JP 2002-156521 A (Sumitomo Chemical Co., Ltd.), 31 May, 2002 (31.05.02), Full text; all drawings (Family: none) | 1-16 |
| A | JP 11-066933 A (Nitto Denko Corp.), 09 March, 1999 (09.03.99), Full text; all drawings (Family: none) | 1-16 |
| A | JP 11-065464 A (Nitto Denko Corp.), 05 March, 1999 (05.03.99), Full text; all drawings (Family: none) | 1-16 |
| A | JP 2002-138203 A (Sumitomo Osaka Cement Co., Ltd.), 14 May, 2002 (14.05.02), Full text; all drawings (Family: none) | 1-16 |
| A | JP 2001-133624 A (Sumitomo Osaka Cement Co., Ltd.), 18 May, 2001 (18.05.01), Full text; all drawings (Family: none) | 1-16 |
| A | JP 11-073115 A (Kanebo, Ltd.), 16 March, 1999 (16.03.99), Full text; all drawings (Family: none) | 1-16 |
| A | JP 10-157023 A (Asahi Chemical Industry Co., Ltd.), 16 June, 1998 (16.06.98), Full text; all drawings (Family: none) | 1-16 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 10319859 A